# EUROPÄISCHE PATENTSCHRIFT

(11) **EP 3 729 212 B1**
(45) Veröffentlichungstag und Bekanntmachung des Hinweises auf die Patenterteilung: **05.01.2022**
(21) Anmeldenummer: 18811817.8
(22) Anmeldetag: 30.11.2018
(51) Int. Cl.: G05B 19/042

(54) **FELDGERÄTEELEKTRONIK FÜR EIN FELDGERÄT DER AUTOMATISIERUNGSTECHNIK**
FIELD DEVICE ELECTRONICS FOR A FIELD DEVICE USED IN AUTOMATION ENGINEERING
ÉLECTRONIQUE POUR UN APPAREIL DE TERRAIN DE LA TECHNOLOGIE D'AUTOMATISATION

(30) Priorität: 20.12.2017 DE 102017130775
(43) Veröffentlichungstag der Anmeldung: 28.10.2020
(73) Patentinhaber: Endress+Hauser SE+Co. KG, 79689 Maulburg (DE)
(72) Erfinder: STRÜTT, Bernd, 79585 Steinen (DE); BAUER, Max, 79618 Rheinfelden (DE); FUZ, Andreas, 79588 Efringen-Kirchen (DE)
(74) Vertreter: Andres, Angelika Maria
(86) Internationale Anmeldenummer: PCT/EP2018/083171
(87) Internationale Veröffentlichungsnummer: WO 2019/120942

(56) Entgegenhaltungen:
- DE-A1-102006 062 603
- DE-A1-102008 062 815
- DE-A1-102015 115 275

## Beschreibung

Die Erfindung bezieht sich auf eine Feldgeräteelektronik für ein Feldgerät der Automatisierungstechnik und ein Feldgerät der Automatisierungstechnik mit einer solchen Feldgeräteelektronik.

Feldgeräte der Automatisierungstechnik dienen ganz allgemein zur Messung einer Prozessgröße, bspw. einer einen Druck- oder einen Füllstand repräsentierenden Größe, und sind über eine Leitung, insbesondere eine Zweidrahtleitung mit einer übergeordneten Einheit verbunden. Feldgeräte dieser Art werden insb. in der industriellen Mess- und Regeltechnik, sowie in der Automatisierungs- und Prozesssteuerungstechnik zur Messung von Prozessvariablen eingesetzt.

In Abhängigkeit von der zu messenden Prozessvariablen wird hierzu heute eine große Vielzahl verschiedener Feldgeräte, wie z.B. Druck-, Temperatur-, Durchfluss- und/oder Füllstandsfeldgeräte, eingesetzt.

Über die Leitung erfolgt im Betrieb eine Energieversorgung einer in dem Feldgerät befindlichen Feldgeräteelektronik und eine Signalübertragung, insb. eines die Prozessgröße wiedergebenden Ausgangssignals, zwischen dem Feldgerät und der übergeordneten Einheit. Hierzu liefern die Feldgeräte ein Ausgangssignal, das dem Messwert der erfassten Prozessvariablen entspricht. Dieses Ausgangssignal wird an eine an das Feldgerät angeschlossene übergeordnete Einheit, z.B. eine zentrale Steuereinheit, z.B. eine Warte oder ein Prozessleitsystem, einer Industrieanlage übertragen. In der Regel erfolgt die gesamte Prozesssteuerung des in der Industrieanlage ablaufenden Herstellungs- und/oder Verarbeitungsprozesses durch die übergeordnete Einheit, wo die Ausgangssignale verschiedener Feldgeräte ausgewertet werden und aufgrund der Auswertung Steuersignale für Aktoren erzeugt werden, die den Prozessablauf steuern.

Die Signalübertragung dieser häufig auch als 2-Draht Feldgeräte bezeichneten Geräte erfolgt vorzugsweise gemäß der in der Industrie üblichen Standards, bspw. dem 4-20 mA Standard.

Gemäß diesem Standard erfolgt die Signalübertragung, indem der über die Leitung fließende Strom vom Feldgerät auf einen die gemessene Prozessgröße wiedergebenden Stromwert eingestellt wird, der dann von der übergeordneten Einheit gemessen und entsprechend interpretiert wird. Hierfür wird der Strom heute regelmäßig entsprechend der gemessenen Prozessgröße auf Werte zwischen 4 mA und 20 mA eingestellt. Zusätzlich kann diesem die gemessene Prozessgröße wiedergebenden Strom ein Kommunikationssignal überlagert werden, indem der Strom entsprechend einem vorgegebenen Kommunikationsprotokoll um den durch die Prozessgröße vorgegebenen Wert moduliert wird. Hierfür ist heute das durch den HART Standard definierte Kommunikationsprotokoll weit verbreitet, bei dem dem zwischen 4 mA und 20 mA liegenden Strom eine hochfrequente das Kommunikationssignal wiedergebende Schwingung von +/- 0,5 mA überlagert wird.

Eine weitere Gruppe bilden an einen digitalen Datenbus anschließbare Messgeräte, bei denen der durch das Leitungspaar fließende Strom auf einen unabhängig von der gemessenen Prozessgröße vorgegebenen Stromwert eingestellt wird, und diesem Strom das Kommunikationssignal in Form einer hochfrequenten Schwingung überlagert wird. Bekannt Standards hierfür sind PROFIBUS, FOUNDATION FIELDBUS und CAN-BUS.

Feldgeräte dieser Art weisen üblicher Weise eine Feldgeräteelektronik mit zwei Anschlussklemmen auf, über die die Feldgeräteelektronik mit der Leitung verbunden werden kann. Die Feldgeräteelektronik umfasst für gewöhnlich ferner einen in eine Versorgungsleitung eingesetzten Längsregler zur Einstellung eines über die Leitung fließenden Stroms, und einen dem Längsregler nachgeschalteten in einen die Versorgungsleitung mit einer Rückleitung verbindenden Querzweig eingesetzten Querregler.

An die Feldgeräteelektronik kann bspw. ein über eine Versorgungsschaltung mit Energie versorgter Messaufnehmer zur Bestimmung der Prozessgröße und zur Erzeugung eines die Prozessgröße wiedergebenden Messsignals angeschlossen sein.

Dem Feldgerät bzw. der Feldgeräteelektronik steht in der Regel über die Leitung nur eine sehr eng begrenzte über die daran anliegende Eingangsspannung und den vom Längsregler eingestellten Strom vorgegebene Energiemenge zur Verfügung.

Dementsprechend werden heute insb. bei Feldgeräten in Verbindung mit Messaufnehmern mit hohem Energiebedarf, wie z.B. Messaufnehmer von mit Mikrowellen oder mit Ultraschall arbeitenden Füllstandmessgeräten, Verfahren zur effizienten Nutzung der zur Verfügung stehenden Energie eingesetzt. Eine Variante dabei ist die Leistungserfassung indirekt aus der bekannten Klemmenspannung und dem gestellten Strom abzüglich eines Schätzwertes für den Verbrauch für individuelle Komponenten zu bestimmen.

Nachteilig an dieser Variante ist es, dass durch unbekannte Leistungszustände der individuellen Komponenten die geschätzten Leistungsverbräuche nicht mehr mit der Realität übereinstimmen. Der Erfindung liegt somit die Aufgabe zugrunde hier Abhilfe zu leisten.

Aus dem Stand der Technik wurden die DE 10 2015 115275 A1, die DE 10 2008 062815 A1 und die DE 10 2006 062603 A1 bekannt. Die DE 10 2015 115275 A1 betrifft ein Verfahren zur Energieverwaltung eines Feldgerätes der Prozessautomatisierung mit einem ersten Modul und mindestens einem zweiten Modul. Die DE 10 2008 062815 A1 betrifft ein Feldgerät, wie einen Stellungsregler, einen I/P-Wandler oder dergleichen, für eine prozesstechnische Anlage sowie ein Verfahren zum energetischen Versorgen eines Feldgeräts. Die DE 10 2006 062603 A1 bezieht sich auf ein Verfahren zum Betreiben eines Feldgeräts in zwei Betriebszuständen.

Die Aufgabe wird erfindungsgemäß gelöst durch die Feldgeräteelektronik gemäß Patentanspruch 1 und dem Feldgerät gemäß Patentanspruch 14.

Die erfindungsgemäße Feldgeräteelektronik für ein Feldgerät der Automatisierungstechnik umfasst zumindest:
- eine erste und eine zweite Anschlussklemme zum Anschließen der Feldgeräteelektronik an eine Leitung, insbesondere eine Zweidrahtleitung, so dass der Feldgeräteelektronik über die Leitung ein Eingangsstrom zuführbar und an der ersten und zweiten Anschlussklemme eine Klemmenspannung anlegbar ist;
- einen Längsregler, der dazu eingerichtet ist, den Eingangsstrom zu stellen, so dass Daten, insbesondere ein Messwert und/oder Parameterwerte, über die Leitung anhand des Eingangsstroms übertragbar sind;
- einen dem Längsregler nachgeschalter Querregler;
- eine parallel zu dem Querregler geschaltete erste Kapazität, eingerichtet zur Energiespeicherung;
- eine parallel zu dem Querregler und der ersten Kapazität geschaltete Versorgungsschaltung, die dazu eingerichtet ist, eine Betriebsspannung bereitzustellen;
- eine der Versorgungsschaltung nachgeschaltete und durch die Betriebsspannung gespeiste Regel- und/oder Auswerteeinheit, welche bevorzugt zumindest einen Mikroprozessor umfasst, die dazu eingerichtet ist, eine über der ersten Kapazität anliegende Pufferspannung oder eine davon abhängige Größe zu erfassen und anhand der erfassten Pufferspannung oder der davon abhängigen Größe eine Entscheidung über bzw. für zumindest einen Teil der Feldgeräteelektronik zu treffen;
- ferner aufweisend eine Vergleichsschaltung, welche bevorzugt zumindest einen Komparator umfasst, die dazu eingerichtet ist, einen Querstrom, der in einem ersten Querzweig, in dem der Querregler angeordnet ist, zu erfassen und einen Vergleich des Querstroms mit einem Schwellenwert durchzuführen und ein Signal, welches ein Vergleichsergebnis repräsentiert, der Regel- und/oder Auswerteeinheit zur Verfügung zu stellen, wobei die Regel- und/oder Auswerteeinheit ferner dazu eingerichtet ist, die Pufferspannung oder die davon abhängige Größe anhand des Signals bedarfsabhängig zu erfassen.

Eine vorteilhafte Ausgestaltung der Erfindung sieht vor, dass das Treffen der Entscheidung über den zumindest einen Teil der Feldgeräteelektronik ein Feststellen eines aktuellen Zustandes, insbesondere eines Fehlerzustandes, des zumindest einen Teils der Feldgeräteelektronik umfasst und/oder das Treffen der Entscheidung für den zumindest einen Teil der Feldgeräteelektronik ein spezifisches Steuern des zumindest einen Teils der Feldgeräteelektronik umfasst.

Eine weitere vorteilhafte Ausgestaltung der Erfindung sieht vor, dass die Versorgungsschaltung einen getakteten DC/DC-Wandler mit einer Primärseite und einer Sekundärseite umfasst, wobei der DC/DC-Wandler derartig angeordnet ist, dass sich zumindest die erste Kapazität auf der Primärseite befindet und die Betriebsspannung sekundärseitig anliegt, so dass die primärseitige Betriebsspannung zumindest die Regel- und/oder Auswerteinheit speist.

Wiederum eine weitere vorteilhafte Ausgestaltung der Erfindung sieht vor, dass die Regel- und/oder Auswerteeinheit dazu eingerichtet ist, eine Frequenz mit der die Pufferspannung oder die davon abhängige Größe erfasst wird zu erhöhen, wenn das Signal als Vergleichsergebnis ein Überschreiten des Schwellwertes durch den Querstrom repräsentiert.

Eine weitere vorteilhafte Ausgestaltung der Erfindung sieht vor, dass die Regel- und/oder Auswerteeinheit ferner dazu eingerichtet ist, anhand der erfassten Pufferspannung oder der davon abhängigen Größe ein Anlaufen von an der Feldgeräteelektronik anschließbaren Modulen zu steuern. Insbesondere kann die Ausgestaltung vorsehen, dass zum Steuern des Anlaufens der anschließbaren Module die Regel- und/oder Auswerteeinheit dazu eingerichtet ist, die Pufferspannung oder die davon abhängige Größe mit einem Anlaufschwellenwert zu vergleichen und erst beim Überschreiten des Anlaufschwellenwerts durch die Pufferspannung oder der davon abhängigen Größe die anschließbaren Module mit Energie zu versorgen und/oder dass die Regel- und/oder Auswerteeinheit ferner dazu eingerichtet ist, beim Unterschreiten des Anlaufschwellenwertes durch die Pufferspannung oder der davon abhängigen Größe einen Fehlerzustand zu signalisieren.

Eine weitere vorteilhafte Ausgestaltung der Erfindung sieht vor, dass die Feldgeräteelektronik ferner einen Messaufnehmer als anschließbares Modul zum Erfassen und/oder Stellen einer Prozessgröße aufweist, der an die Regel- und/oder Auswerteeinheit angeschlossen ist, wobei die Regel- und/oder Auswerteeinheit dazu eingerichtet ist, anhand der erfassten Pufferspannung oder der davon abhängigen Größe den Messaufnehmer zu steuern. Insbesondere kann die Ausgestaltung vorsehen, dass die Regel- und/oder Auswerteeinheit zum Steuern des Messaufnehmers dazu eingerichtet ist, die erfasste Pufferspannung oder die davon abhängige Größe mit einem minimalen Pufferspannungswert zu vergleichen und beim Unterschreiten des minimalen Pufferspannungswert den Messaufnehmer in einen sicheren Zustand, in dem der Messaufnehmer die Prozessgröße nicht erfasst und/oder stellt, zu fahren und/oder dass die Regel- und/oder Auswerteeinheit ferner dazu eingerichtet ist, beim Unterschreiten des minimalen Pufferspannungswert eine Datensicherung, insbesondere der durch den Messaufnehmer erfassten Prozessgröße, durchzuführen.

Wiederum eine weitere vorteilhafte Ausgestaltung der Erfindung sieht vor, dass zum Feststellen des aktuellen Zustandes, insbesondere des Fehlerzustandes, die Regel- und/oder Auswerteeinheit dazu eingerichtet ist, die erfasste Pufferspannung oder die davon abhängige Größe mit der Klemmenspannung zu vergleichen und in Abhängigkeit davon den aktuellen Zustand des zumindest einen Teils der Feldgeräteelektronik feststellt. Insbesondere kann die Ausgestaltung vorsehen, dass die Regel- und/oder Auswerteeinheit ferner dazu eingerichtet ist, wenn die Pufferspannung oder die davon abhängige Größe die Klemmspannung um einen vorgegebenen Wert unterschreitet, den Fehlerzustand des zumindest einen Teils der Feldgeräteelektronik festzustellen.

Wiederum eine weitere vorteilhafte Ausgestaltung der Erfindung sieht vor, dass die Regel- und/oder Auswerteeinheit anhand der erfassten Pufferspannung oder die davon abhängige Größe eine Leistungsverteilung für den zumindest einen Teil der Feldgeräteelektronik ermittelt und den zumindest einen Teil der Feldgeräteelektronik entsprechend der ermittelten Leistungsverteilung ansteuert. Insbesondere kann die Ausgestaltung vorsehen, dass die Regel- und/oder Auswerteeinheit zur Ermittlung der Leistungsverteilung eine in der ersten Kapazität aktuell gespeicherte Restenergie ermittelt und den zumindest einen Teil der Feldgeräteelektronik anhand der aktuell gespeicherten Restenergie ansteuert.

Wiederum eine weitere vorteilhafte Ausgestaltung der Erfindung sieht vor, dass die Regel- und/oder Auswerteeinheit die Leistungsverteilung anhand eines zum Ausführen einer spezifischen Aktion benötigten Energiebedarfs des zumindest einen Teils der Feldgeräteelektronik ermittelt. Insbesondere kann die Ausgestaltung vorsehen, dass der zum Ausführen einer spezifischen Aktion benötigte Energiebedarf in der Regel- und/oder Auswerteeinheit oder in einer Komponente des Teils der Feldgeräteelektronik hinterlegt, insbesondere gespeichert, ist.

Eine weitere vorteilhafte Ausgestaltung sieht vor, dass die Feldgeräteelektronik ferner eine zweite auf der Primärseite angeordnete Kapazität aufweist, wobei die Feldgeräteelektronik dazu eingerichtet ist, anhand der erfassten Pufferspannung oder der davon abhängigen Größe die zweite Kapazität durch die erste Kapazität zumindest teilweise zu laden. Bspw. kann die Feldgeräteelektronik zum Laden der zweiten Kapazität durch die erste Kapazität ein schaltbares Element, z.B. ein FET, ein Transistor oder ein Schaltregler, aufweisen. Insbesondere kann die Ausgestaltung vorsehen, dass die erste und zweite Kapazität derartig dimensioniert sind, dass die zweite Kapazität mindestens einen Faktor 2, bevorzugt einen Faktor 5, besonders bevorzugt einen Faktor 10 größer als die erste Kapazität ist.

Wiederum eine weitere vorteilhafte Ausgestaltung der Erfindung sieht vor, dass der zumindest eine Teil der Feldgeräteelektronik wenigstens eine, bevorzugt wenigstens zwei, besonders bevorzugt wenigstens drei der folgenden Komponenten bzw. Module aufweist:
- die Regel- und/oder Auswerteeinheit,
- einen Touchscreen, der an die Regel- und/oder Auswerteeinheit angeschlossen ist,
- ein bzw. die zweite Kapazität,
- einen bzw. den Messaufnehmer zum Erfassen und/oder Stellen einer Prozessgröße, der an die Regel- und/oder Auswerteeinheit angeschlossen ist, und/oder
- ein Funkmodul zum drahtlosen Übertragen von Daten, insbesondere von Messwerten und/oder Parameterwerten, das an die Regel- und/oder Auswerteeinheit angeschlossen ist.

Das erfindungsgemäße Feldgerät umfasst eine Feldgeräteelektronik nach zumindest einer der zuvor beschriebenen Ausgestaltungen.

Die Erfindung wird anhand der nachfolgenden Zeichnung näher erläutert. Es zeigt:

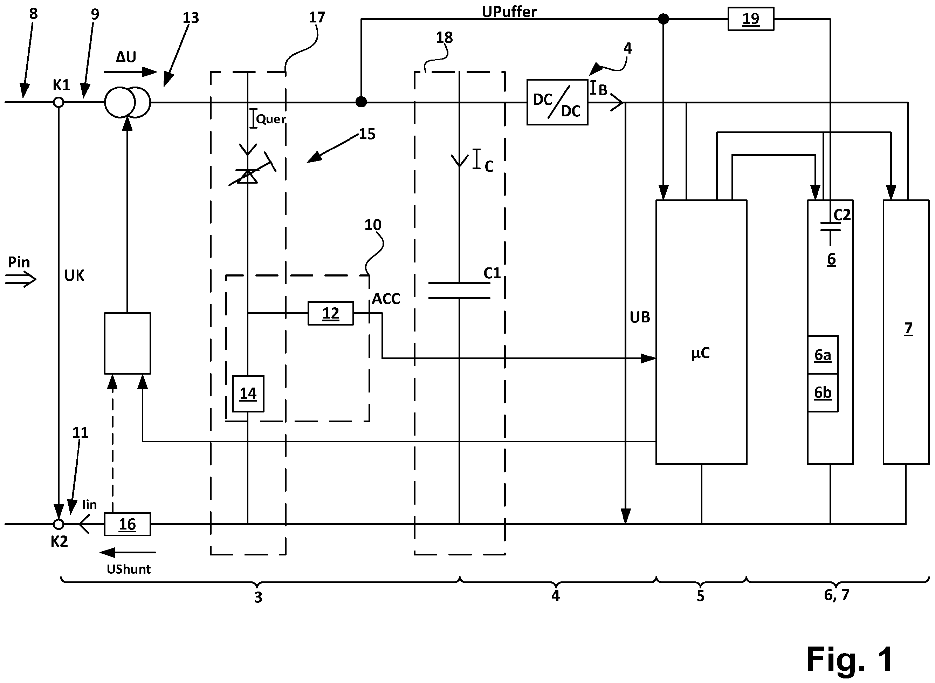

Fig. 1: ein Blockschaltbild einer sich innerhalb eines Feldgerätes befindlichen Feldgeräteelektronik.

Figur 1 zeigt ein Blockschaltbild einer sich innerhalb eines Feldgerätes befindlichen Feldgeräteelektronik. Die Feldgeräteelektronik umfasst eine Eingangsschaltung 3, eine interne Versorgungschaltung 4 zum Bereitstellen einer internen Versorgungspannung UB und eine Regel- und Auswerteschaltung 5, an die weitere Module, bspw. ein Messaufnehmer 6 oder eine Anzeige- und/oder Bedieneinheit 7, anschließbar ist.

Der Messaufnehmer 6 kann je nach zu messender Prozessgröße beispielsweise ein Druckmessaufnehmer, ein Durchflussmessaufnehmer oder eine Füllstandsmessaufnehmer sein. Der Messaufnehmer 6 dient zur Bestimmung der Prozessgröße und zur Erzeugung eines die Prozessgröße wiedergebenden Messsignals. Hierzu umfasst er beispielsweise eine Messelektronik 6a und einen daran angeschlossenen Messwandler 6b, z.B. einen Sensor oder eine Sonde.
Ferner kann an die Regel- und Auswerteeinheit 5 die Anzeige- und/oder Bedieneinheit 7 zum Darstellen von Informationen, bspw. der Prozessgröße, und/oder Bedienen, insbesondere Parametrieren, anschließbar sein. Die Anzeige und/oder Bedieneinheit 7 kann bspw. ein berührungsempfindlicher Bildschirm bzw. ein Touchscreen umfassen, welcher vorzugsweise in ein das Feldgerät umgebendes Feldgerätegehäuse eingelassen ist.
Die innerhalb des Feldgerätes befindliche Feldgeräteelektronik ist, bspw. über entsprechende Anschlussklemmen K1 und K2, an eine Leitung 8, insbesondere eine Zweidrahtleitung, angeschlossen, so dass im Betrieb eine Energieversorgung des Feldgerätes bzw. der Feldgeräteelektronik und eine Signalübertragung zwischen dem Feldgerät bzw. der Feldgeräteelektronik und einer übergeordneten Einheit durch die Leitung, insbesondere die Zweidrahtleitung, erfolgen kann. Hierzu weist die Feldgeräteelektronik eine Versorgungsleitung 9 und eine Rückleitung 11 auf, über die eine an den Klemmen K1 und K2 mittels der Zweidrahtleitung bereitgestellte Klemmenspannung UK intern verteilt wird.

Die Eingangsschaltung 3 umfasst einen in die Versorgungsleitung 9 eingebrachten in Fig. 1 nur schematisch dargestellten Längsregler 13, der dazu eingerichtet ist, einen von der Anschlussklemme K1 über die Versorgungsleitung 9 und die Rückleitung 11 zur Anschlussklemme K2 fließenden Eingangsstrom lin zu stellen. Das Stellen des Stromes erfolgt hierbei vorzugsweise gemäß einem in der Automatisierungstechnik üblichen Standard, bspw. dem 4-20 mA Standard. Hierfür wird der über die Leitung 8, insbesondere die Zweidrahtleitung, fließende Strom I dem Feldgerät über die Klemme K1 zugeführt und anhand eines dem Längsregler 13 zugeführten dem Messsignal des Messaufnehmers 6 entsprechenden Signal von dem Längsregler 13 auf einen Stromwert, vorzugsweise zwischen 4-20 mA, eingestellt und über die Klemme K2 der Leitung 8 wieder zugeführt, so dass eine übergeordnete Einheit anhand des Stromwertes des Stromes I den entsprechenden Messwert ermitteln kann. Zusätzlich kann dem Strom ein von der Regel- und/oder Auswerteeinheit 5 vorgegebenes Kommunikationssignal KS überlagert werden, indem dem Strom entsprechend einem vorgegebenen Kommunikationsprotokoll ein entsprechender Wert aufmoduliert wird. Hierfür wird vorzugsweise das durch den HART Standard definierte Kommunikationsprotokoll verwendet, bei dem dem zwischen 4 mA und 20 mA liegenden Strom eine hochfrequente das Kommunikationssignal KS wiedergebende Schwingung von +/- 0,5 mA aufmoduliert wird.

Alternativ kann der Strom zur Anbindung des Feldgerätes an einen digitalen Datenbus auf einen unabhängig von der gemessenen Prozessgröße vorgegebenen Stromwert eingestellt werden, dem ein beispielsweise von der Messelektronik 6a des Messaufnehmers 6 erzeugtes Kommunikationssignal, insb. ein die gemessene Prozessgröße wiedergebendes Kommunikationssignal, in Form einer hochfrequenten Schwingung überlagert wird. Bekannte Standards hierfür sind PROFIBUS, FOUNDATION FIELDBUS und CAN-BUS.

Dem Längsregler 13 ist, in einem die Versorgungsleitung 9 mit der Rückleitung verbindenden ersten Querzweig 17, ein Querregler 15 nachgeschaltet. Der Querregler 15 ist im einfachsten Fall eine Z-Diode, über die die an den Anschlussklemmen K1 und K2 anliegende Klemmenspannung UK zur weiteren Verwendung stabilisiert wird. Ferner ist in die Rückleitung 11 ein Shuntwiderstand 16 zum Rücklesen des Eingangsstromes lin eingebracht.

Ferner ist die Versorgungseinheit 4 dem Längsregler 13 in der Versorgungsleitung 9 nachgeschaltet, die bspw. einen Gleichspannungswandler bzw. DC/DC-Wandler umfassen kann. Gemäß der in Fig. 1 dargestellten Ausgestaltung weist die Versorgungsschaltung 4 einen getakteten DC/DC-Wandler mit einer Primärseite und einer Sekundärseite auf. Die Primärseite ist über die Versorgungsleitung 9 zur Anschlussklemme K1 hin verbunden. Über die Versorgungseinheit 4 wird sekundärseitig eine interne Betriebsspannung UB mit einer entsprechenden internen Betriebsleistung PB = UB*IB bereitgestellt. Die Versorgungspannung UB dient dazu, die weiteren sekundärseitigen Komponenten der Feldgeräteelektronik, bspw. die Regel- und/oder Auswerteeinheit 5, oder die Module die an die Feldgeräteelektronik angeschlossen werden können, bspw. der Messaufnehmer 6 oder die Anzeige- und/oder Bedieneinheit 7, zu speisen.

Die Klemmspannung UK entspricht somit einer Summe aus einem über den Längsregler 13 erzeugten Spannungsabfall ΔU, einer über den ersten Querzweig 17 abfallenden Spannung UQuer, und einer über den Shuntwiderstand abfallenden Shuntspannung UShunt. Aufgrund der Leitung 8, insbesondere der Zweidrahtleitung, die an die Anschlussklemmen K1 und K2 angeschlossen ist, ist die Leistungsaufnahme Pin = UK * lin der Feldgeräteelektronik auf einen maximalen Wert begrenzt. Dies führt dazu, dass die Versorgungsschaltung 4 beim Bereitstellen der internen Betriebsspannung UB auch nur eine begrenzte interne Versorgungsleistung PBstat = UB* IB zur Verfügung stellen kann.

Um trotzdem weitere Komponenten der Feldgeräteelektronik oder daran angeschlossener Module speisen zu können, ist parallel des ersten Querzweigs 17 in einem zweiten Querzweig 18 eine der Versorgungsschaltung 4 vorgeschaltet erste Kapazität C1 geschaltet. Die erste Kapazität C1 ist, wie in Fig. 1 dargestellt, primärseitig angeordnet. Die erste Kapazität C1 kann bspw. in Form eines oder mehrerer Kondensatoren ausgebildet sein. Aufgrund des in einem Feldgerät 1 vorherrschenden Platzmangels ist die erste Kapazität C1 derartig dimensioniert, dass die erste Kapazität C1 vorzugsweise kleiner 1000µF, bevorzugt kleiner 500µF, besonders bevorzugt kleiner 300µF ist. Die erste Kapazität C1 dient dazu, eine Zwischenpufferung bzw. - speicherung der Energie zu ermöglichen. Über die in der ersten Kapazität C1 gespeicherte Energie können dann weitere Komponenten der Feldgeräteelektronik oder der daran angeschlossenen Module 6, 7 dynamisch eine erhöhte Leistung zur Verfügung gestellt werden.

Erfindungsgemäß ist die Regel- und/oder Auswerteeinheit 5 derartig eingerichtet, dass eine Pufferspannung UPuffer, die über der ersten Kapazität C1 anliegt, erfasst wird. Dies kann bspw. mit Hilfe eines Spannungsteilers der zwischen am Abgriffspunkt für die Pufferspannung UPuffer und der Regel- und/oder Auswerteeinheit 5 geschaltet ist, erfolgen. Die Regel- und/oder Auswerteeinheit 5 ist ferner dazu eingerichtet, anhand der ermittelten Pufferspannung UPuffer oder einer davon abhängigen Größe eine Entscheidung über bzw. für zumindest einen Teil der Feldgeräteelektronik zu treffen.

Eine Entscheidung für zumindest einen Teil der Feldgeräteelektronik kann bspw. derartig Erfolgen, dass die Regel- und/oder Auswerteeinheit 5 eine in der ersten Kapazität C1 gespeicherte Energie E = ½ * UPuffer * C1 anhand der erfassten Pufferspannung UPuffer ermittelt. Durch die ermittelte in der ersten Kapazität C1 gespeicherten Energie kann so ein aktueller Ladezustand der ersten Kapazität C1 bestimmt werden. Anhand des aktuellen Ladezustandes kann die Regel- und/oder Auswerteeinheit 5 wiederum gezielt einzelne Komponenten, bzw. Module, wie bspw. den Messaufnehmer 6 oder die Anzeige- und/oder Bedieneinheit 7 ansteuern. Insbesondere kann die Regel- und/oder Auswerteeinheit 5 einzelne Komponenten bzw. Module aktivieren, wenn der Ladezustand ausreichend ist oder ggfl. deaktivieren, wenn der Ladezustand kritisch ist und so eine Entscheidung für die Komponente bzw. das Modul treffen.

Ferner kann die Regel- und/oder Auswerteeinheit 5 dazu ausgelegt sein, dass diese die Pufferspannung UPuffer dahingehend überprüft, ob eine gewisse Mindestschwelle unterschritten wird. In dem Fall, dass die Pufferspannung UPuffer die Mindestschwelle unterschreitet, kann dann die Regel- und/oder Auswerteeinheit 5 den Messaufnehmer 6 in einen sichern Zustand fahren, d.h. die vorgenommen Messung gezielt unterbrechen und die bereits gemessenen Werte speichern.

Die Regel- und/oder Auswerteeinheit 5 kann aber auch dazu eingerichtet sein, dass eine Entscheidung für zumindest einen Teil der Feldgeräteelektronik getroffen wird. Dies kann bspw. derartig erfolgen, dass in dem Fall, dass die Pufferspannung UPuffer einen Erwartungswert unterschreitet, die Regel- und/oder Auswerteeinheit 5 einen Fehlerzustand der Feldgeräteelektronik feststellt und dies ggfl. signalisiert. Hierzu wird der Erwartungswert vorzugsweise in Abhängigkeit der Klemmenspannung festgelegt.

Ferner kann aufgrund der ermittelten Pufferspannung eine präzisere Leistungsverteilung für die internen Komponenten der Feldgeräteelektronik und/oder der daran angeschlossenen Module durch die Regel- und/oder Auswerteeinheit 5 durchgeführt werden. Hierzu kann es vorgesehen sein, dass zusätzlich zu dem ermittelten Ladezustand der ersten Kapazität C1 auch die von den einzelnen Komponenten der Feldgeräteelektronik bzw. Module benötigte Energie bekannt ist. Dies kann bspw. dadurch erreicht werden, dass die benötigte Energie der Komponenten bzw. Module in der Regel- und/oder Auswerteeinheit 5 hinterlegt bzw. gespeichert ist. Alternativ kann die benötigte Energie auch in den einzelnen Komponenten bzw. Module der Feldgeräteelektronik hinterlegt sein.

Die Feldgeräteelektronik kann ferner eine Vergleichsschaltung 10 umfassen, die dazu eingerichtet ist, einen Querstrom IQuer, der in dem ersten Querzweig 17, in dem der Querregler 15 angeordnet ist, zu erfassen. Anhand des erfassten Querstroms IQuer kann ein Vergleich mit einem hinterlegten Schwellenwert ISchwelle durchgeführt werden und ein Signal ACC, welches ein Vergleichsergebnis repräsentiert, erzeugt und der Regel- und/oder Auswerteeinheit 5 zur Verfügung gestellt bzw. zugeführt werden. Die Regel- und/oder Auswerteeinheit 5 wiederum ist dazu eingerichtet, die Pufferspannung UPuffer oder die davon abhängige Größe anhand des Signals ACC bedarfsabhängig zu erfassen. Aufgrund dessen, dass der Querstrom IQuer ein Maß für den Ladezustand der ersten Kapazität C1 darstellt, lässt sich so das Erfassen der Pufferspannung mit einer veränderlichen Frequenz durchführen. Hierbei kann die Regel- und/oder Auswerteeinheit 5 dazu eingerichtet sein, die Frequenz mit der die Pufferspannung UPuffer oder die davon abhängige Größe erfasst wird zu erhöhen, wenn das Signal ACC als Vergleichsergebnis ein Überschreiten des hinterlegten Schwellenwerts durch den Querstrom repräsentiert.

Ergänzend oder alternativ hierzu kann die Regel- und/oder Auswerteeinheit 5 ferner dazu eingerichtet sein, anhand der erfassten Pufferspannung UPuffer oder der davon abhängigen Größe ein Anlaufen von an der Feldgeräteelektronik anschließbaren Modulen, bspw. den Messaufnehmer oder die Anzeige- und/oder Bedieneinheit, zu steuern. Hierzu wird die Pufferspannung oder die davon abhängige Größe mit einem Anlaufschwellenwert von der Regel- und/oder Auswerteeinheit 5 verglichen und erst beim Überschreiten des Anlaufschwellenwerts durch die Pufferspannung UPuffer oder der davon abhängigen Größe die anschließbaren Module mit Energie versorgt, so dass diese anlaufen können.

Wiederum ergänzend oder alternativ hierzu kann die Feldgeräteelektronik eine auf der Primärseite des DC/DC-Wandlers angeordnete zweite Kapazität C2 aufweisen. Die zweite Kapazität C2 kann bspw. im Modul des Messumformers 6 angeordnet sein und dazu dienen, den bei einem Messvorgang des Messumformers 6 benötigten Energiebedarf zumindest teilweise bereitzustellen. Hierzu ist die Feldgeräteelektronik dazu ausgebildet, die zweite Kapazität C2 durch die erste Kapazität C1 in Abhängigkeit von der erfassten Pufferspannung UPuffer oder der davon abhängigen Größe, bspw. beim Erreichen bzw. Überschreiten eines vergebenen Wertes, zu laden. Die Steuerung zur Ladung der zweiten Kapazität C2 erfolgt vorzugsweise durch ein schaltendes Element 19, bspw. ein FET, Transistor oder ein Schaltregler, welches vorzugsweise durch das angeschlossene Modul selbst gesteuert wird.

### Bezugszeichenliste

- 3: Eingangsschaltung
- 4: Versorgungsschaltung
- 5: Regel- und Auswerteschaltung
- 6: Messaufnehmer
- 6a: Messelektronik
- 6b: Messwandler
- 7: Anzeige- und/oder Bedieneinheit
- 8: Leitung, Zweidrahtleitung bzw. Prozessschleife
- 9: Versorgungsleitung
- 10: Vergleichsschaltung
- 11: Rückleitung
- 12: Komparator
- 13: Längsregler
- 14: Messwiderstand
- 15: Querregler
- 16: Shuntwiderstand
- 17: Erster Querzweig
- 18: Zweiter Querzweig
- 19: Schaltbares Element
- ACC: ein vom Vergleich der Vergleichsschaltung abhängiges Signal
- C1: Erste Kapazität
- C2: Zweite Kapazität
- lin: Eingangsstrom
- ISchwelle: Schwellenwert, insbesondere Schwellenstromwert
- K1: Anschlussklemme
- K2: Anschlussklemme
- PB: Betriebsleistung
- UB: Betriebsspannung
- UK: Klemmenspannung
- UPuffer: Pufferspannung
- UQuer: Querspannung
- UShunt: Shuntspannung

## Patentansprüche

1. Feldgeräteelektronik für ein Feldgerät der Automatisierungstechnik, zumindest aufweisend:
- eine erste und eine zweite Anschlussklemme (K1, K2) zum Anschließen der Feldgeräteelektronik an eine Leitung (8), so dass der Feldgeräteelektronik über die Leitung ein Eingangsstrom (lin) zuführbar und an der ersten und zweiten Anschlussklemme eine Klemmenspannung (UK) anlegbar ist;
- einen Längsregler (13), der dazu eingerichtet ist, den Eingangsstrom zu stellen, so dass Daten über die Leitung anhand des Eingangsstroms übertragbar sind;
- einen dem Längsregler nachgeschalter Querregler (15);
- eine parallel zu dem Querregler geschaltete erste Kapazität (C1), eingerichtet zur Energiespeicherung;
- eine parallel zu dem Querregler und der ersten Kapazität geschaltete Versorgungsschaltung (4), die dazu eingerichtet ist, eine Betriebsspannung (UB) bereitzustellen;
- eine der Versorgungsschaltung nachgeschaltete und durch die Betriebsspannung (UB) gespeiste Regel- und/oder Auswerteeinheit (5), die dazu eingerichtet ist, eine über der ersten Kapazität anliegende Pufferspannung (UPuffer) oder eine davon abhängige Größe zu erfassen und anhand der erfassten Pufferspannung oder der davon abhängigen Größe eine Entscheidung über bzw. für zumindest einen Teil der Feldgeräteelektronik zu treffen;
- ferner aufweisend eine Vergleichsschaltung (10), die dazu eingerichtet ist, einen Querstrom (IQuer), der in einem ersten Querzweig (17), in dem der Querregler (15) angeordnet ist, zu erfassen und einen Vergleich des Querstroms (IQuer) mit einem Schwellenwert (ISchwelle) durchzuführen und ein Signal (ACC), welches ein Vergleichsergebnis repräsentiert, der Regel- und/oder Auswerteeinheit (5) zur Verfügung zu stellen, wobei die Regel- und/oder Auswerteeinheit (5) ferner dazu eingerichtet ist, die Pufferspannung (UPuffer) oder die davon abhängige Größe anhand des Signals bedarfsabhängig zu erfassen.

2. Feldgeräteelektronik nach Anspruch 1, wobei das Treffen der Entscheidung über den zumindest einen Teil der Feldgeräteelektronik ein Feststellen eines aktuellen Zustandes des zumindest einen Teils der Feldgeräteelektronik umfasst und/oder das Treffen der Entscheidung für den zumindest einen Teil der Feldgeräteelektronik ein spezifisches Steuern des zumindest einen Teils der Feldgeräteelektronik umfasst.

3. Feldgeräteelektronik nach zumindest einem der vorhergehenden Ansprüche, wobei die Versorgungsschaltung (4) einen getakteten DC/DC-Wandler mit einer Primärseite und einer Sekundärseite umfasst, wobei der DC/DC-Wandler derartig angeordnet ist, dass sich zumindest die erste Kapazität (C1) auf der Primärseite befindet und die Betriebsspannung (UB) sekundärseitig anliegt, so dass die primärseitige Betriebsspannung (UB) zumindest die Regel- und/oder Auswerteinheit (5) speist.

4. Feldgeräteelektronik nach dem vorhergehenden Anspruch, wobei die Regel- und/oder Auswerteeinheit (5) dazu eingerichtet ist, eine Frequenz mit der die Pufferspannung (UPuffer) oder die davon abhängige Größe erfasst wird zu erhöhen, wenn das Signal (ACC) als Vergleichsergebnis ein Überschreiten des Schwellwertes durch den Querstrom repräsentiert.

5. Feldgeräteelektronik nach zumindest einem der vorhergehenden Ansprüche, wobei die Regel- und/oder Auswerteeinheit (5) ferner dazu eingerichtet ist, anhand der erfassten Pufferspannung (UPuffer) oder der davon abhängigen Größe ein Anlaufen von an der Feldgeräteelektronik anschließbaren Modulen (6, 7) zu steuern.

6. Feldgeräteelektronik nach dem vorhergehenden Anspruch, wobei zum Steuern des Anlaufens der anschließbaren Module (6, 7) die Regel- und/oder Auswerteeinheit (5) dazu eingerichtet ist, die Pufferspannung (UPuffer) oder die davon abhängige Größe mit einem Anlaufschwellenwert zu vergleichen und erst beim Überschreiten des Anlaufschwellenwerts durch die Pufferspannung (UPuffer) oder der davon abhängigen Größe die anschließbaren Module (6, 7) mit Energie zu versorgen.

7. Feldgeräteelektronik nach dem vorhergehenden Anspruch, wobei die Regel- und/oder Auswerteeinheit (5) ferner dazu eingerichtet ist, beim Unterschreiten des Anlaufschwellenwertes durch die Pufferspannung (Puffer) oder der davon abhängigen Größe einen Fehlerzustand zu signalisieren.

8. Feldgeräteelektronik nach zumindest einem der vorhergehenden Ansprüche, ferner aufweisend einen Messaufnehmer (6) als anschließbares Modul zum Erfassen und/oder Stellen einer Prozessgröße, der an die Regel- und/oder Auswerteeinheit (5) angeschlossen ist, wobei die Regel- und/oder Auswerteeinheit (5) dazu eingerichtet ist, anhand der erfassten Pufferspannung (UPuffer) oder der davon abhängigen Größe den Messaufnehmer (6) zu steuern.

9. Feldgeräteelektronik nach dem vorhergehenden Anspruch, wobei die Regel- und/oder Auswerteeinheit (5) zum Steuern des Messaufnehmers (6) dazu eingerichtet ist, die erfasste Pufferspannung (UPuffer) oder die davon abhängige Größe mit einem minimalen Pufferspannungswert zu vergleichen und beim Unterschreiten des minimalen Pufferspannungswert den Messaufnehmer in einen sicheren Zustand, in dem der Messaufnehmer die Prozessgröße nicht erfasst und/oder stellt, zu fahren.

10. Feldgeräteelektronik nach dem vorhergehenden Anspruch, wobei die Regel- und/oder Auswerteeinheit (5) ferner dazu eingerichtet ist, beim Unterschreiten des minimalen Pufferspannungswert eine Datensicherung durchzuführen.

11. Feldgeräteelektronik nach zumindest einem der Ansprüche 2-10, wobei zum Feststellen des aktuellen Zustandes die Regel- und/oder Auswerteeinheit (5) dazu eingerichtet ist, die erfasste Pufferspannung (UPuffer) oder die davon abhängige Größe mit der Klemmenspannung (UK) zu vergleichen und in Abhängigkeit davon den aktuellen Zustand des zumindest einen Teils der Feldgeräteelektronik feststellt.

12. Feldgeräteelektronik nach zumindest einem der vorhergehenden Ansprüche, wobei die Regel- und/oder Auswerteeinheit (5) anhand der erfassten Pufferspannung (UPuffer) oder die davon abhängige Größe eine Leistungsverteilung für den zumindest einen Teil der Feldgeräteelektronik ermittelt und den zumindest einen Teil der Feldgeräteelektronik entsprechend der ermittelten Leistungsverteilung ansteuert.

13. Feldgeräteelektronik nach dem vorhergehenden Anspruch, wobei der zum Ausführen einer spezifischen Aktion benötigte Energiebedarf in der Regel- und/oder Auswerteeinheit (5) oder in einer Komponente bzw. einem Modul des Teils der Feldgeräteelektronik hinterlegt ist

14. Feldgerät der Automatisierungstechnik umfassend eine Feldgeräteelektronik nach zumindest einem der vorhergehenden Ansprüche.

## Claims

1. Field device electronics unit for a field device used in automation engineering, said electronics unit comprising at least:
- a first and a second connection terminal (K1, K2) designed to connect the field device electronics unit to a cable (8) so that an input current (lin) can be supplied to the field device electronics unit via the cable and a terminal voltage (UK) can be applied to the first and the second connection terminal;
- a series regulator (13), which is designed to regulate the input current in such a way that data can be transmitted over the cable using the input current;
- a shunt regulator (15) downstream from the series regulator;
- a first capacitor (C1) switched in parallel to the shunt regulator and designed to store energy;
- a supply circuit (4) switched in parallel to the shunt regulator and the first capacitor, wherein said circuit is designed to provide an operating voltage (UB);
- a control and/or evaluation unit (5) connected downstream from the supply circuit and powered by the operating voltage (UB), wherein said unit is designed to measure a buffer voltage (UPuffer) present via the first capacitor or a variable which depends on said voltage, and to make a decision about the field device electronics unit, or for at least a part of the field device electronics unit, on the basis of the measured buffer voltage or the dependent variable;
- further having a comparison circuit (10), which is designed to measure a cross current (IQuer) which is in the first cross branch (17) in which the shunt regulator (15) is arranged, and to compare the cross current (IQuer) to a threshold value (ISchwelle) and to provide a signal (ACC) representing the result of the comparison to the control and/or evaluation unit (5), wherein the control and/or evaluation unit (5) is further designed to measure, if required, the buffer voltage (UPuffer) or a variable that depends on the voltage on the basis of the signal.

2. Field device electronics unit as claimed in Claim 1, wherein the decision regarding the at least one part of the field device electronics unit comprises determining an actual state of the at least one part of the field device electronics unit and/or the decision regarding the at least one part of the field device electronics unit comprises a specific control of the at least one part of the field device electronics unit.

3. Field device electronics unit as claimed in at least one of the previous claims, wherein the supply circuit (4) comprises a clocked DC/DC converter with a primary side and a secondary side, wherein the DC/DC converter is arranged in such a way that at least the first capacitor (C1) is located on the primary side and that the operating voltage (UB) is applied to the secondary side in such a way that the operating voltage (UB) on the primary side powers at least the control and/or evaluation unit (5).

4. Field device electronics unit as claimed in the previous claim, wherein the control and/or evaluation unit (5) is designed to increase a frequency at which the buffer voltage (UPuffer), or a dependent variable, is measured if the signal (ACC) represents, as the result of the comparison, an overshooting of the threshold value by the cross current.

5. Field device electronics unit as claimed in at least one of the previous claims, wherein the control and/or evaluation unit (5) is further designed to control the start-up of modules (6, 7) that can be connected to the field device electronics unit on the basis of the measured buffer voltage (UPuffer) or the dependent variable.

6. Field device electronics unit as claimed in the previous claim, wherein, to control the start-up of connectable modules (6, 7), the control and/or evaluation unit (5) is designed to compare the buffer voltage (UPuffer), or the dependent variable, to a start-up threshold value and to only provide energy to the connectable modules (6, 7) when the buffer voltage (UPuffer) or the dependent variable exceeds the start-up threshold value.

7. Field device electronics unit as claimed in the previous claim, wherein the control and/or evaluation unit (5) is further designed to signal an error state if the buffer voltage (buffer) or the dependent variable drops below the start-up threshold value.

8. Field device electronics unit as claimed in at least one of the previous claims, further comprising a sensor (6) as a connectable module and designed to measure and/or regulate a process variable, wherein the sensor is connected to the control and/or evaluation unit (5), wherein said control and/or evaluation unit (5) is designed to control the sensor (6) on the basis of the measured buffer voltage (UPuffer) or the dependent variable.

9. Field device electronics unit as claimed in the previous claim, wherein the control and/or evaluation unit (5) designed to control the sensor (6) is configured to compare the measured buffer voltage (UPuffer), or the dependent variable, to a minimum buffer voltage value and, in the event that the buffer voltage is below the minimum buffer voltage value, to set the sensor to a safe state in which the sensor does not measure and/or set the process variable.

10. Field device electronics unit as claimed in the previous claim, wherein the control and/or evaluation unit (5) is further configured to perform data storage when the minimum buffer voltage value is undershot.

11. Field device electronics unit as claimed in at least one of the Claims 2 to 10, wherein, to determine the actual state, the control and/or evaluation unit (5) is configured to compare the measured buffer voltage (UPuffer), or the dependent variable, to the terminal voltage (UK) and, depending on this, determines the actual state of the at least one part of the field device electronics unit.

12. Field device electronics unit as claimed in at least one of the previous claims, wherein the control and/or evaluation unit (5) determines, on the basis of the measured buffer voltage (U Puffer) or the dependent variable, a power distribution for the at least one part of the field device electronics unit and controls the at least one part of the field device electronics unit according to the determined power distribution.

13. Field device electronics unit as claimed in the previous claim, wherein the energy demand needed to perform a specific action is stored in the control and/or evaluation unit (5) or in a component or a module of the part of the field device electronics unit.

14. Field device used in automation engineering comprising a field device electronics unit as claimed in at least one of the previous claims.

## Revendications

1. Électronique d'appareil de terrain destinée à un appareil de terrain de la technique d'automatisation, laquelle électronique comprend :
- une première et une seconde borne de raccordement (K1, K2) destinées à raccorder l'électronique d'appareil de terrain à une ligne (8), de sorte qu'un courant d'entrée (lin) peut être fourni à l'électronique d'appareil de terrain par l'intermédiaire de la ligne et une tension aux bornes (UK) peut être appliquée à la première et à la seconde borne de raccordement ;
- un régulateur série (13), lequel est conçu pour régler le courant d'entrée de sorte que les données peuvent être transmises via la ligne sur la base du courant d'entrée ;
- un régulateur transversal (15) couplé en aval du régulateur série ;
- un premier condensateur (C1) couplé en parallèle avec le régulateur transversal et conçu pour le stockage d'énergie ;
- un circuit d'alimentation (4) couplé en parallèle avec le régulateur transversal et le premier condensateur, lequel circuit est conçu pour fournir une tension de fonctionnement (UB) ;
- une unité de régulation et d'exploitation (5) couplée en aval du circuit d'alimentation et alimentée par la tension de fonctionnement (UB), laquelle unité est conçue pour mesurer une tension tampon (UPuffer) présente aux bornes du premier condensateur ou une variable qui en dépend et, sur la base de la tension tampon mesurée ou de la variable qui en dépend, pour prendre une décision sur ou pour au moins une partie de l'électronique d'appareil de terrain ;
- comprenant en outre un circuit de comparaison (10), lequel est conçu pour mesurer un courant transversal (IQuer) circulant dans une première branche transversale (17) dans laquelle le régulateur transversal (15) est disposé, et pour effectuer une comparaison du courant transversal (IQuer) avec une valeur seuil (ISchwelle) et pour fournir un signal (ACC), lequel signal représente un résultat de comparaison, à l'unité de régulation et/ou d'exploitation (5), l'unité de régulation et/ou d'exploitation (5) étant en outre configurée pour mesurer en cas de besoin, sur la base du signal, la tension tampon (UPuffer) ou la grandeur qui en dépend.

2. Électronique d'appareil de terrain selon la revendication 1, pour laquelle la prise de décision concernant l'au moins une partie de l'électronique d'appareil de terrain comprend la détermination d'un état actuel de l'au moins une partie de l'électronique d'appareil de terrain et/ou la prise de décision pour l'au moins une partie de l'électronique d'appareil de terrain comprend la commande spécifique de l'au moins une partie de l'électronique d'appareil de terrain.

3. Électronique d'appareil de terrain selon au moins l'une des revendications précédentes, pour laquelle le circuit d'alimentation (4) comprend un convertisseur CC/CC cadencé avec un côté primaire et un côté secondaire, le convertisseur CC/CC étant disposé de telle sorte qu'au moins le premier condensateur (C1) se trouve du côté primaire et que la tension de fonctionnement (UB) est appliquée du côté secondaire, de sorte que la tension de fonctionnement (UB) du côté primaire alimente au moins l'unité de régulation et/ou d'exploitation (5).

4. Électronique d'appareil de terrain selon la revendication précédente, pour laquelle l'unité de régulation et/ou d'exploitation (5) est conçue pour augmenter une fréquence à laquelle la tension tampon (UPuffer), ou la grandeur qui en dépend, est mesurée lorsque le signal (ACC) représente, en tant que résultat de comparaison, un dépassement de la valeur seuil par le courant transversal.

5. Électronique d'appareil de terrain selon au moins l'une des revendications précédentes, pour laquelle l'unité de régulation et/ou d'exploitation (5) est en outre conçue pour commander un démarrage de modules (6, 7) pouvant être raccordés à l'électronique d'appareil de terrain sur la base de la tension tampon (UPuffer) mesurée ou de la variable qui en dépend.

6. Électronique d'appareil de terrain selon la revendication précédente, pour laquelle, pour commander le démarrage des modules raccordables (6, 7), l'unité de régulation et/ou d'exploitation (5) est conçue pour comparer la tension tampon (UPuffer), ou la grandeur qui en dépend, à une valeur seuil de démarrage et pour n'alimenter en énergie les modules raccordables (6, 7) que lorsque la valeur seuil de démarrage est dépassée par la tension tampon (UPuffer) ou la grandeur qui en dépend.

7. Électronique d'appareil de terrain selon la revendication précédente, pour laquelle l'unité de régulation et/ou d'exploitation (5) est en outre conçue pour signaler un état d'erreur lorsque la tension tampon (tampon) ou la grandeur qui en dépend passe en dessous de la valeur seuil de démarrage.

8. Électronique d'appareil de terrain selon au moins l'une des revendications précédentes, comprenant en outre un capteur (6) en tant que module raccordable et destiné à la mesure et/ou au réglage d'une grandeur de process, lequel capteur est relié à l'unité de régulation et/ou d'exploitation (5), l'unité de régulation et/ou d'exploitation (5) étant conçue pour commander le capteur (6) sur la base de la tension tampon (UPuffer) mesurée ou de la grandeur qui en dépend.

9. Électronique d'appareil de terrain selon la revendication précédente, pour laquelle l'unité de régulation et/ou d'exploitation (5) destinée à la commande du capteur (6) est configurée pour comparer la tension tampon (UPuffer) mesurée, ou la grandeur qui en dépend, à une valeur de tension tampon minimale et, si la tension tampon est inférieure à la valeur de tension tampon minimale, pour amener le capteur dans un état sûr dans lequel le capteur ne mesure pas et/ou ne règle pas la grandeur de process.

10. Électronique d'appareil de terrain selon la revendication précédente, pour laquelle l'unité de régulation et/ou d'exploitation (5) est en outre configurée pour effectuer une sauvegarde des données lorsque la tension tampon passe sous une valeur minimale.

11. Électronique d'appareil de terrain selon au moins l'une des revendications 2 à 10, pour laquelle, pour déterminer l'état actuel, l'unité de régulation et/ou d'exploitation (5) est configurée pour comparer la tension tampon (UPuffer) mesurée, ou la variable qui en dépend, à la tension aux bornes (UK) et, en fonction de cela, détermine l'état actuel de l'au moins une partie de l'électronique d'appareil de terrain.

12. Électronique d'appareil de terrain selon au moins l'une des revendications précédentes, pour laquelle l'unité de régulation et/ou d'exploitation (5) détermine une répartition de puissance pour l'au moins une partie de l'électronique d'appareil de terrain sur la base de la tension tampon (UPuffer) mesurée ou de la grandeur qui en dépend, et commande l'au moins une partie de l'électronique d'appareil de terrain selon la répartition de puissance déterminée.

13. Électronique d'appareil de terrain selon la revendication précédente, pour laquelle le besoin en énergie nécessaire pour effectuer une action spécifique est stocké dans l'unité de régulation et/ou d'exploitation (5) ou dans un composant ou un module de la partie de l'électronique d'appareil de terrain.

14. Appareil de terrain de la technique d'automatisation comprenant une électronique d'appareil de terrain selon au moins l'une des revendications précédentes.
